Europäisches Patentamt

European Patent Office

Office européen des brevets

(19)

(11) Veröffentlichungsnummer: **0 288 894 B1**

(12) **EUROPÄISCHE PATENTSCHRIFT**

(45) Veröffentlichungstag der Patentschrift: **25.09.91**

(51) Int. Cl.5: **C08G 69/16, C08G 69/18**

(21) Anmeldenummer: **88106344.0**

(22) Anmeldetag: **21.04.88**

(54) **Alpha-amino-epsilon-caprolactam modifizierte Polyamide.**

(30) Priorität: 01.05.87 DE 3714607
02.03.88 DE 3806632

(43) Veröffentlichungstag der Anmeldung:
02.11.88 Patentblatt 88/44

(45) Bekanntmachung des Hinweises auf die
Patenterteilung:
25.09.91 Patentblatt 91/39

(84) Benannte Vertragsstaaten:
DE FR GB IT

(56) Entgegenhaltungen:
DE-A- 1 770 754

(73) Patentinhaber: **BAYER AG**

**W-5090 Leverkusen 1 Bayerwerk(DE)**

(72) Erfinder: **Meyer, Rolf-Volker, Dr.**
**Buchheimerstrasse 23**
**W-4150 Krefeld(DE)**
Erfinder: **Dhein, Rolf, Dr.**
**Deswatinesstrasse 30**
**W-4150 Krefeld(DE)**
Erfinder: **Wandel, Martin, Dr.**
**Donatusstrasse 17**
**W-4047 Dormagen 11(DE)**
Erfinder: **Selbeck, Harald, Dr.**
**Erftweg 73**
**W-4150 Krefeld(DE)**
Erfinder: **Fahnler, Friedrich, Dipl.-Ing.**
**Wimmersweg 60**
**W-4150 Krefeld(DE)**
Erfinder: **Heinz, Hans-Detlef, Dr.**
**Breslauer Strasse 31**
**W-4150 Krefeld 11(DE)**
Erfinder: **Müller, Peter-Rolf, Dr.**
**Paul-Klee-Strasse 76**
**W-5090 Leverkusen(DE)**

Rank Xerox (UK) Business Services

## Beschreibung

Die Erfindung betrifft durch hydrolytische Polykondensation von Lactamen in Gegenwart kleiner Mengen von $\alpha$-Amino-$\epsilon$-caprolactam (ACL) und etwa äquivalenter Mengen an Dicarbonsäuren hergestellte, thermoplastisch verformbare, verzweigte aliphatische Polyamide, sowie ein Verfahren zur ihrer Herstellung, das sich durch erheblich verkürzte Polykondensationszeiten auszeichnet, ohne daß sich vernetzte Produkte bilden. Das Verfahren benutzt gegebenenfalls zusätzlich eine Festphasen-Nachkondensation, wobei eine schnelle Weiterkondensation zu zwar verzweigten, aber m-Kresol-löslichen Produkten mit erhöhter Schmelzviskosität erfolgt.

Polyamide sind eine seit vielen Jahren für eine Vielzahl praktischer Anwendungen bewährte Klasse von Polymeren, die nach verschiedenen Verfahren hergestellt werden können, die aus sehr unterschiedlichen Polyamid-bildenden Bausteinen synthetisiert werden können und die im speziellen Anwendungsfall allein oder auch in Kombination mit Verarbeitungshilfsmitteln, polymeren Legierungspartnern oder auch mineralischen Verstärkungsmaterialien (wie z.B. Füllstoffe oder Glasfasern) zu Werkstoffen mit speziell eingestellten Eigenschaftskombinationen ausgerüstet werden können. So werden Polyamide in großen Mengen zur Herstellung von Fasern, Kunststoff-Formteilen und Folien, aber auch z.B. als Schmelzkleber und Hilfsmittel in einer Vielzahl von Anwendungen technisch verwendet.

Während Lactame kationisch, hydrolytisch (mit Wasserzusatz) oder auch anionisch zu Polyamiden umgewandelt werden können, kommt für die Polyamid-Herstellung aus polyamidbildenden Monomeren wie Diaminen, Dicarbonsäuren bzw. geeigneten Derivaten und Aminocarbonsäuren, auch in Kombination mit Lactamen, im wesentlichen nur die Polykondensations-Reaktion in Frage (s. Vieweg, Müller; Kunststoff-Handbuch, Bd. VI, S. 11 ff, Carl-Hanser Verlag, München 1966).

Auch bei der Herstellung von Polyamiden aus Lactamen, z. B. von Polyamid-6 aus $\epsilon$-Caprolactam, hat die "hydrolytische Polymerisation" die größte Bedeutung.

Zur Herstellung der Polyamide sind eine Vielzahl von Verfahrensweisen bekannt geworden, wobei je nach gewünschtem Endprodukt unterschiedliche Monomerbausteine zur Bestimmung der Matrixnatur, verschiedene Kettenregler zur Einstellung eines angestreben mittleren Molgewichts oder auch Monomere mit "reaktiven"Gruppen für später beabsichtigte Nachbehandlungen (z. B. Aminogruppen oder Sulfonatgruppen zur besseren Anfärbbarkeit von Fasern mit sauren bzw. basischen Farbstoffen) eingesetzt werden.

Kontinuierliche Herstellungsverfahren sind ebenso bekannt wie die diskontinuierliche Produktion, z. B. in Autoklaven.

Bei allen Methoden zur Herstellung von (Co)Polyamiden durch Polykondensation bzw. durch hydrolytische Polymerisation der Lactame ist jedoch gemeinsam, daß ausgehend von geeigneten Monomermischungen die Herstellung der (Co)Polyamide mindestens 6, vorzugsweise 6 - 12 Stunden Reaktionszeit in Anspruch nimmt, bis die Polyamide zum Abspinnen von Strängen aus der Polymerschmelze ausreichend hohe Molgewichte erreicht haben bzw. die Molgewichte für den geplanten Praxiseinsatz ausreichend hoch sind.

Unabhängig von der langen Reaktionszeit ist in vielen Fällen noch eine Nachkondensation - z. B. in der Festphase - erforderlich, um noch höhere Molgewichte zu erzielen. Diese bedingt zwangsläufig - wegen der relativ geringeren Reaktionsgeschwindigkeit - verhältnismäßig lange Nachkondensationszeiten bei relativ hohen Temperaturen, welche oft schädigend (Farbe, Oxidation, Gelteilchenbildung) wirken.

Die zur Herstellung der (Co)Polyamide erforderlichen langen Reaktionszeiten begrenzen somit gravierend die Kapazität der Herstellanlagen und sind insbesondere, da die Reaktion bei Temperaturen von über 200°C, meist über 250°C, immer aber oberhalb des Schmelzpunktes des herzustellenden Produktes erfolgen muß, in hohem Maße energieverbrauchend und kostspielig.

Eine wesentliche Verkürzung der Reaktionszeiten bei der Herstellung von (Co)Polyamiden - ohne Verzicht auf die bekannten guten anwendungstechn. Eigenschaften der Produkte - wäre somit als großer, insbesondere kosten-und energie-sparender Fortschritt anzusehen.

Überraschend wurde nun gefunden, daß die Polykondensationszeit zur Herstellung von (Co)Polyamiden aus Lactamen drastisch verkürzt werden kann, wenn man den polyamidbildenden Ausgangsmonomeren kleine Mengen von $\alpha$-Amino-$\epsilon$-caprolactam und etwa äquimolare Mengen einer (Poly)carbonsäure zusetzt. Bei niedrigen Polykondensationstemperaturen werden dabei niedrige Gehalte an Caprolactam-Monomeren/Oligomeren im Polyamid erhalten.

Unabhängig von der eigentlichen Herstellung der Polyamide ist allerdings für viele Anwendungen, welche noch höhermolekulare Produkte erfordern, z.B. die Extrusion zu Folien oder Halbzeug, eine weitere Steigerung des Molekulargewichts erforderlich. Diese kann in den üblicherweise eingesetzten Polykondensationsanlagen, z.B. Autoklaven bei diskontinuierlicher Produktion oder VK-Rohren bzw. Rohrreaktoren bei kontinuierlicher Produktion, nur schlecht erfolgen, da die stark ansteigende Schmelzviskosität zu verschiedenen Problemen führt. So wird die Temperaturführung sowie die Entfernung des Reaktionswassers immer schwieriger, und die große Reaktionszeit bei den notwendigen hohen Temperaturen führt in verstärktem Maß zu Nebenreaktionen und Gelteilchenbildung, die die Qualität des Endprodukts drastisch verschlechtern können. Auch das Abspinnen wird zunehmend schwieriger bei sehr hohen Schmelzviskositätswerten.

Hier bietet die Festphasennachkondensation entscheidende Vorteile. Aufgrund der weitaus geringeren Reaktionstemperaturen (ca. 180 - 220°C, je nach Polyamid, im Vergleich zu 250 bis 280°C bei der Schmelzekondensation) wird die Gefahr unerwünschter Nebenreaktionen und Vergelung reduziert; die Tatsache, daß es sich bei dem nachzukondensierenden Material um definierte Partikel mit vorhandenem Zwischenteilchenvolumen handelt, erleichtert zusammen mit der Variante, das Granulat kontinuierlich zu bewegen, z.B. in Taumeltrocknern, die Aufrechterhaltung einer gleichmäßigen Reaktionstemperatur sowie die Entfernung des Reaktionswassers. Da es sich um Partikel handelt, kommt es auch nicht zu Abspinnproblemen.

Das Festphasen-Nachkondensationsverfahren wird zwar industriell in großem Maße zur Herstellung höhermolekularer Polyamide eingesetzt, dennoch beinhaltet auch dieses Verfahren eine Reihe von Nachteilen, die ihre Ursache in der relativ niedrigen Nachkondensationsgeschwindigkeit haben. So erfordert das übliche Nachkondensationsverfahren immer noch einen hohen Zeit- und Energieaufwand. Aufgrund der beträchtlichen Verweilzeit bei Reaktionstemperatur ist das Verfahren außerdem in hohem Maße anlagenintensiv.

Es wäre somit als großer technologischer, insbesondere kostensparender Fortschritt anzusehen, wenn die Festphasennachkondensation von Polyamiden wesentlich beschleunigt und/oder bei tieferen Temperaturen durchgeführt werden könnte, ohne daß Nachteile bei den Polyamideigenschaften in Kauf genommen werden müßten.

Überaschend wurde nun gefunden, daß die erfindungsgemäßen, mit $\alpha$-Amino-$\epsilon$-caprolactam (ACL)-modifizierten Polyamide sich ungewöhnlich rasch selbst zu sehr hochmolekularen Produkten in der festen Phase nachkondensieren lassen, wobei gleichzeitig auch noch die Reaktionstemperatur gesenkt werden kann.

Dieser Effekt ist trotz der Tatsache, daß die eigentliche Schmelzepolykondensation durch ACL beschleunigt wird, unerwartet und nicht vorhersehbar gewesen, da bekanntlich die Schmelzepolykondensation und die Festphasennachkondensation ganz verschiedenen Gesetzmäßigkeiten und Mechanismen folgen (siehe z.B. R.J. Gaymans, J. Amirtharaj, H. Kamp, J. Appl. Polym. Sci. 27, 2513-2526 (1984); L.B. Sokolov; Solid Phase Polymerization, Syntheses by Polycondensation Publ. Israel Programm for Scientific Translation, 1968).

Weiter wurde gefunden, daß hochmolekulare, wahrscheinlich verzweigte (Co)Polyamide mit deutlich erhöhter Schmelzviskosität gegenüber ACL-freien (Co)Polyamiden erhalten werden, wenn man eine Festphasen-Nachkondensation mit erheblich verkürzter Reaktionszeit und relativ niedrigen Temperaturen durchführt.

Gegenstand der Erfindung ist daher ein Verfahren zur Herstellung von (Co)Polyamiden aus einem oder mehreren Lactamen, dadurch gekennzeichnet, daß der zu polymerisierenden, polyamidbildenden Mischung 0,02 -2 Gew.-%, vorzugsweise 0,1 - 1,0 % $\alpha$-Amino-$\epsilon$-caprolactam (im folgenden als ACL bezeichnet) und in etwa äquimolare Mengen einer Polycarbonsäure (und gegebenenfalls $\omega$-Aminocarbonsäure) zugesetzt werden und daß gegebenenfalls diese ACL-modifizierten (Co)Polyamide in der Festphase zu verzweigt aufgebauten, aber noch in m-Kresol löslichen (Co)Polyamiden mit erhöhter Schmelzviskosität nachkondensiert werden.

Gegenstand der Erfindung sind auch die so erhältlichen ACL-modifizierten Polyamide mit veränderter Struktur (offensichtlich verzweigtem Aufbau und veränderter Fließeigenschaft), sowie daraus hergestellte Formkörper. Eine besondere Erhöhung der Anfärbbarkeit wird nicht beobachtet, jedoch tragen die Polyamide etwas erhöhte Aminoendgruppen-Gehalte.

Es sind viele Versuche beschrieben worden, durch Cokondensation mit basische Gruppen enthaltenden, polyamidbildenden Bausteinen basische Polyamide zu erhalten, die insbesondere bei Einsatz als Fasern mit sauren Farbstoffen leichter anfärbbar sind.

So wird in der DE-A 1 770 754 z. B. offenbart, daß mit einer Reihe von verschiedenen derartigen Zusatzstoffen eine verbesserte Anfärbbarkeit von Polyamidfasern und eine höhere Farbintensität erreichbar ist. Als eines von mehreren Beispielen zu verwendender Zusatzstoffe wird dort auch ACL genannt, wobei das im aufgeführten Beispiel (VIII) beschriebene Polyamid sich von den anderen nicht charakteristisch unterscheidet.

Ein Hinweis auf eine reaktionsverkürzende Eigenschaft speziell ausgewählter ACL/Dicarbonsäure-Zusätze fehlt völlig; die Polykondensationszeit betrug dort 16 Stunden. Dies ist umso verständlicher, da bei allen anderen genannten Zusatzstoffen eine entsprechende reaktionsverkürzende Wirkung, wie in der vorliegenden Erfindung beschrieben, nicht sichtbar ist. (Siehe auch Vergleichsversuch im Beispielteil der Anmeldung).

In der EP-A 0 013 553 wird beschrieben, daß ein Polymer aus ACL bisher nicht bekannt sei und man vermutet dazu, daß wegen der Reaktionsmöglichkeiten der Aminogruppe Vernetzung resultieren müsse. Laut EP 0 013 553 werden daher besser anfärbbare Polyamide aus N,N-Dialkyl-substituierten $\alpha$-Amino-$\epsilon$-Caprolactamen, die sich durch spezielle Löslichkeitseigenschaften auszeichnen, aufgebaut. Diese Dialkyl-substituierten ACL zeigen jedoch in kleinen Mengen keinerlei positiven Einfluß auf die Polymerisation von Lactamen und wirken in größerer Menge als Polymerisationsverzögerer.

Es wurde gefunden, daß ACL bei der Polymerisation von Lactamen als alleiniger Zusatz als Molekulargewichtvermindernder Kettenregler wirkt und dementsprechend bei Konzentrationen von etwa >1 % sogar den Aufbau hochmolekularer Polyamide verhindert.

Es war somit völlig unvorhersehbar und überraschend, daß die erfindungsgemäß beanspruchte Kombination an ACL und Dicarbonsäuren, zum Reaktionsbeginn dem Monomeransatz zugesetzt, zu einer drastischen Beschleunigung der Polyamidbildung bei trotzdem erzielbaren hohen Molekulargewichten im resultierenden Polyamid führt.

Als Lactame in Sinne der Erfindung sind Pyrrolidon $\epsilon$-Caprolactam, Önanthlactam, Capryllactam und Laurinlactam allein oder im Gemisch geeignet, vorzugsweise $\epsilon$-Caprolactam und Laurinlactam. Ganz bevorzugt wird $\epsilon$-Caprolactam eingesetzt.

$\alpha$-Amino-$\epsilon$-caprolactam (ACL) ist eine bekannte Substanz und kann nach bekannten Verfahren hergestellt werden (Herstellung s. CAS-Nr. 671/42/1).

Geeignete Dicarbonsäuren zur Kombination mit ACL sind vorzugsweise aliphatische Dicarbonsäuren mit 6 - 12 C-Atomen, aromatische Dicarbonsäuren mit 8 - 18 C-Atomen, so z. B. Adipinsäure, Trimethyladipinsäure, Suberinsäure, Azelainsäure, Sebacinsäure, Dodecandisäure, Isophthalsäure, Terephthalsäure. Besonders bevorzugt werden Adipinsäure, Azelainsäure und Isophthalsäure eingesetzt. In Mengen bis 20 Äquivalentprozent der Carbonsäuregruppen können auch Monocarbonsäuren wie Essigsäure oder Benzoesäure eingesetzt werden. Die aromatischen Dicarbonsäuren werden in untergeordneten Mengen (maximal etwa 40 Mol-% der Dicarbonsäuren) eingesetzt.

Da der Reaktionszeit-verkürzende Effect des ACL völlig überraschenderweise nur in Gegenwart der Polycarbonsäuren wirksam ist, kann vermutet werden, daß protoniertes ACL die aktive Species ist.

Zur Beschleunigung der Lactampolymerisation sind 0,02 - 2 Gew.-%, vorzugsweise 0,2 - 1 Gew.-%, besonders bevorzugt 0,3 - 0,7 Gew.-% ACL sowie die etwa äquivalenten Mengen Dicarbonsäure erfindungsgemäß einzusetzen. Die Zugabe der ACL/Dicarbonsäure-Komponenten kann getrennt oder gemeinsam, gegebenenfalls in wäßriger Lösung, erfolgen, in jedem Falle aber vor oder zu Beginn der Reaktion. Während äquivalente Mengen an Carbonsäuregruppen (bezogen auf die $\alpha$-Aminogruppe in ACL) bevorzugt sind, können etwa 0,680 - 1,10 Äquivalente, bevorzugt 0,85 -1,03 Äquivalente, insbesondere 0,90 -1,00 Äquivalente an Carbonsäuregruppen verwendet werden.

Die Polykondensationszeit läßt sich dabei z. B. bei 270° C von ca. 6 - 10 h auf 0,5 - 3 h reduzieren. Bevorzugt werden Polykondensationszeiten von 1 bis 3 Stunden bei Temperaturen von 240 - 285° C, wobei die längeren Zeiten vorzugsweise den niedrigeren Temperaturen zugeordnet sind, die kurzen Zeiten vorzugsweise den höheren Temperaturen. Es ist möglich, die Polykondensationsreaktion - sowohl diskontinuierlich als auch in kontinuierlicher Form, z. B. in Röhrenreaktoren, Ein- oder Zweiwellenextrudern - gegebenenfalls unter Nachschaltung von Nachkondensationsgefäßen oder -Reaktoren, durchzuführen.

Erfindungsgemäß läßt sich die Polykondensationszeit (in Abhängigkeit von der jeweiligen Polykondensationstemperatur) auf weniger als die Hälfte der üblichen Polykondensationszeit bei ACL-freien (Co)-Polyamiden reduzieren, um zu Polyamiden der gewünschten Schmelzviskosität zu gelangen.

Es ist ebenso möglich, die Reaktionsbeschleunigung durch Polyamid-Synthese bei niedrigerer Temperatur zu nutzen. Dies führt z. B. bei der Polyamid-6-Herstellung aus $\epsilon$-Caprolactam zu höheren Polyamid-Ausbeuten bzw. der Temperatur entsprechend niedrigeren Monomer-Gehalten. Die entstehenden Polyamide haben im Vergleich zu bekannten Vergleichsprodukten bei vergleichbarer Lösungsviskosität ($\eta_{rel}$, 1 %ig in m-Kresol bei 25° C) charakteristisch höhere Schmelzviskositäten und zeigen eine ausgeprägte Strukturviskosität, vermutlich eine andere (verzweigte ?) Struktur.

Die erfindungsgemäß hergestellten Polyamide können in bekannter Weise aus der Schmelze, vorzugsweise in ein Wasserbad, ausgetragen, gehäckselt, extrahiert und getrocknet werden.

Aus den Polyamiden können ebenso in bekannter Weise durch thermoplastische Verarbeitung Formkörper, Fasern und Folien hergestellt werden.

Gegebenenfalls können die so erhaltenen, ACL-modifizierten (Co)Polyamide in fester Phase und bei Temperaturen unter deren Schmelzpunkt nachkondensiert werden, um das Molekulargewicht bei relativ niedrigen Reaktionstemperaturen zu erhöhen, wobei im allgemeinen auch eine deutliche Erhöhung der

EP 0 288 894 B1

Schmelzviskosität eintritt.

Zur Herstellung dieser hochmolekularen, verzweigten Polyamide durch Festphasenkondensation können beliebige, durch Schmelzpolykondensation hergestellte ACL-modifizierte (Co)Polyamide wie hier gleichfalls beansprucht, eingesetzt werden; besonders geeignet sind z.B. solche auf Basis von Polyamid 6, 11 oder 12.

Die Reaktionszeit in der festen Phase bis zum Erreichen einer gewünschten Schmelzviskosität ist gegenüber nicht ACL-modifizierten Polyamiden drastisch reduziert; die Nachkondensation kann auch bei deutlich tieferen Temperaturen durchgeführt werden.

Geeignete Reaktionstemperaturen für die Nachkondensation liegen im Bereich von 140 bis 240° C, bevorzugt 150 bis 210° C, insbesondere 150 bis 200° C. Auf alle Fälle sollte die Reaktion mindestens 10° C, bevorzugt mindestens 20° C, unterhalb des Schmelzpunktes des jeweiligen Polyamids durchgeführt werden.

Die Kondensationszeit kann zwischen wenigen Minuten und ca. 30 Stunden, bevorzugt zwischen 0,5 und 20 Stunden, gewählt werden. Sie beträgt insbesondere 1 bis 15 Stunden. Die längeren Reaktionszeiten sind dabei besonders bei den niedrigeren Nachkondensationstemperaturen zu verwenden, die kürzeren Reaktionszeiten entsprechen vorzugsweise den höheren Nachkondensationstemperaturen.

Alle, üblicherweise für eine Festphasennachkondensation eingesetzten Vorrichtungen sind zur Herstellung der erfindungsgemäßen Polyamide geeignet. Bevorzugt werden bei diskontinuierlicher Arbeitsweise Taumeltrockner und Wendelmischer eingesetzt. Auch kontinuierliche Feststoff-Nachkondensationsverfahrensind zur Herstellung der erfindungsgemäßen Polyamide geeignet.

Die hochmolekularen, verzweigten Polyamide haben im Vergleich zu bekannten Vergleichsprodukten bei ähnlicher Lösungsviskosität ($\eta_{rel}$, 1 %ig in m-Kresol bei 25° C) charakteristisch höhere Schmelzviskositätswerte und zeigen eine ausgeprägte Strukturviskosität.

Die hochmolekularen, verzweigten Polyamide sind geeignet für alle Anwendungen hochmolekularer Polyamide, insbesondere jedoch für die Extrusion zu Folien oder Halbzeug, oder auch zur Herstellung von Fasern und Borsten, oder als Basis zur Herstellung besonders schlagzäher, tieftemperaturfester Polyamid-Mischungen mit an sich bekannten Schlagzäh-Modifikatoren.

Die nachfolgenden Beispiele dienen zur Erläuterung der Erfindung ohne sie in irgendeiner Weise darauf einzuschränken.

Die Schmelzviskositätswerte wurden mit einem Contraves RM 300 Platte-Kegel-Viskosimeter bei den angegebenen Temperaturen gemessen.

Beispiel 1

9,8 kg ε-Caprolactam, 200 g einer 50 %igen wäßrigen Lösung von α-Amino-ε-caprolactam (ACL) (entspricht 1 Gew.-%, bezogen auf ε-Caprolactam-Menge), 50 g Azelainsäure und 1 l destilliertes Wasser werden in einem 25 l Druckautoklaven eingewogen. Durch dreimaliges Aufdrücken von 3 bar Stickstoff und anschließendes Entspannen wird eine Stickstoffatomosphäre im Autoklaven erreicht. Man heizt zügig (ca. 1 Stunde) auf 200° C auf und rührt unter Eigendruck 1 Stunde bei 200° C. Dann wird in ca. 1 Stunde auf Normaldruck entspannt, zügig auf 270° C aufgeheizt und dann 1 Stunde bei 270° C polykondensiert, wobei 40 l N$_2$/h übergeleitet werden.

Man läßt absetzen und drückt das Polyamid mit Überdruck als Strang durch das Bodenventil in ein Wasserbad.

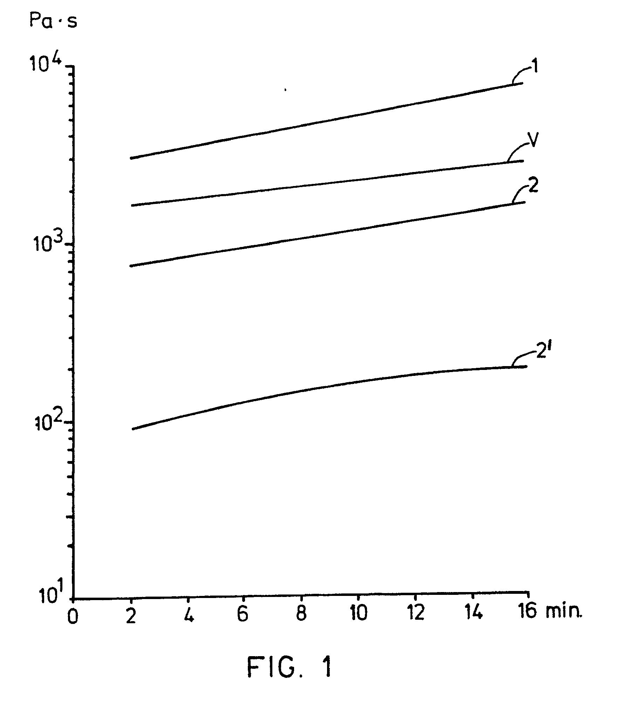

Nach Granulierung und Extraktion mit destilliertem Wasser erhält man 8,74 kg Polyamid-6 mit einer relativen Viskosität (1 %ig in m-Kresol bei 25° C) von 3,5. Das Produkt hat eine sehr hohe Schmelzviskosität (siehe Abb. 1).

Beispiel 2

Analog Beispiel 1 wird ein Polyamid hergestellt aus 10,0 kg ε-Capolactam, 100 g (390 mMol) α-Amino-ε-caprolactam (als 50 %ige wäßrige Lösung) und 35 g (186 mMol) Azelainsäure. Das Polyamid hat eine relative Viskosität von 3,1. Die Schmelzviskosität entspricht in etwa derjenigen bekannter Polyamid-6-Produkte mit einer relativen Viskosität von 3,8.

Vergleichsversuch 1

Analog Beispiel 1 wird ein Polyamid hergestellt, ohne die Zusätze von α-Amino-ε-caprolactam und Azelainsäure.

5

EP 0 288 894 B1

Man erhält ein Polyamid mit einer relativen Viskosität von 2,1, das sich wegen sehr niedriger Schmelzviskosität kaum abspinnen läßt.

Vergleichsversuch 2

Analog Vergleichsversuch 1 wird ein Polyamid hergestellt, aber 6 Stunden bei 270° C polykondensiert. Man erhält ein Polyamid mit einem $\eta_{rel}$ 3,0, dessen Schmelzviskosität erheblich niedriger als die des Produktes von Beispiel 2 ist.

Vergleichsversuch 3

Beispiel 1 wird wiederholt mit dem Unterschied, das die Zusätze an ACL und Azelainsäure erst nach der Entspannung bei 200° C zugesetzt wird. Das nach 1 Stunde Polykondensationszeit erhaltene Produkt hat eine relative Viskosität von 2,2 nach 6 Stunden einer solchen von 3,0.

Es ist also vorteilhafter, erfindungsgemäß die Zusätze von Amino-caprolactam und Dicarbonsäure bereits vor oder mit Reaktionsbeginn einzumischen (s. Beispiel1).

Beispiel 3

90 g $\epsilon$-Caprolactam, 10,4 g 6-Amino-hexansäure, 1 g ACL und 0,70 g Azelainsäure werden in einem 250 ml Rundkolben eingewogen. Nach zweimaligem Evakuieren und Entspannen mit Stickstoff wird unter Rühren in 15 Minuten auf 200° C aufgeheizt und 1 Stunde bei 200° C gehalten. Dann wird in 10 Minuten auf 270° C erhitzt und 2 Stunden polykondensiert. Das Granulat wird mit destilliertem Wasser extrahiert. Das Polyamid hat eine relative Viskosität von 4,2.

Vergleichsversuch 4

Beispiel 3 wird wiederholt mit dem Unterschied, daß keine Azelainsäure zugesetzt wird. Nach 2 Stunden bei 270° C ist die Schmelze noch dünnflüssig. Nach 6 Stunden Kondensationszeit erhält man ein Produkt mit einem $\eta_{rel}$-Wert von 3,2.

Vergleichsversuch 5

Unter den Bedingungen des Vergleichsversuches 4 erhält man ohne ACL und ohne Azelainsäure nach 6 Stunden ein Polyamid mit einem $\eta_{rel}$-Wert von 3,9.

Aus den vorgelegten Vergleichsversuchen ergibt sich, daß ACL alleine als Kettenabbrecher bei der Polyamidsynthese wirkt.

Beispiel 4

Beispiel 3 wird wiederholt, wobei die Polykondensationstemperatur mit 240° C gewählt wurde (statt 270° C) und 0,80 g ACL zusammen mit 0,40 g Adipinsäure zugesetzt wurden. Man erhält nach 3 Stunden/240° C ein Polyamid mit hoher Schmelzviskosität und einer relativen Viskosität von 2,9.

Vergleich

Ohne die Zusätze entsteht unter den gleichen Bedingungen nur eine sehr niedrigviskose Polyamidschmelze mit einem $\eta_{rel}$-Wert von 1,5.

Beispiel 5

Analog Beispiel 1 werden 7,0 kg Laurinlactam, 100 g einer 50 %igen wäßrigen ACL-Lösung, 28 g Adipinsäure und 1,5 l destilliertes Wasser in den Autoklaven eingeführt. Es wird unter Rühren auf 210° C aufgeheizt (20 bar) entspannt, auf 240° C erhitzt (14 bar), entspannt und auf 270° C aufgeheizt (2 bar). Unter Eigendruck wurde 2 Stunden bei 270° C gerührt, in 15 Minuten entspannt und dann sofort, ohne weitere Polykondensation bei 270° C, das Polyamid als Strang ausgetragen. Das extrahierte Polyamid (6,7 % Laurinlactamextrakt mit Methanol) hatte eine relative Viskosität von 3,5. Die Viskosität der Schmelze in Abhängigkeit von der Schubspannung (gemessen bei 280° C) beträgt

6

EP 0 288 894 B1

300 Pa/4000 Pa.s bzw.
1000 Pa/3600 Pa.s bzw.
5000 Pa/1900 Pa.s.

Vergleichsversuch 6

Beispiel 5 wird ohne ACL/Adipinsäure wiederholt. Man erhält ein Polyamid mit einer relativen Viskosität von 2,8 (nach Extraktion mit Methanol:6,5 % Laurinlactam). Die Vergleichswerte zur Schmelzviskosität bei 280°C sind

300 Pa/130 Pa.s bzw.
1000 Pa/125 Pa.s bzw.
5000 Pa/110 Pa.s.

Nach weiteren 4 Stunden Polykondensation bei 270°C erhält man ein Polyamid mit einer relativen Viskosität von 3,7, dessen Schmelzviskosität jedoch noch immer geringer ist als die des Produktes aus Beispiel 5:

300 Pa/2000 Pa.s bzw.
1000 Pa/1900 Pa.s.

In der Fig. 1 wird die Viskosität in Abhängigkeit von der Meßzeit dargestellt. Kurve 1 bedeutet Meßkurven von Beispiel 1, Kurve 2 bedeutet Meßkurven vom Beispiel 2 und Kurve 2′ bedeutet Meßkurven vom Vergleichsversuch 2. Kurve V entspricht den Meßkurven an handelsüblichem Polyamid-6 mit einer relativen Viskosität von 3,9 (Durethan® B 40 F der BAYER AG/D 5090 Leverkusen).

Beispiel 6

In einen 250 ml Rundkolben wurden 92,5 g Caprolactam, 9,4 g 6-Aminocapronsäure, 1,02 g 50 %ige wäßrige ACL-Lösung und 0,38 g Azelainsäure eingewogen. Nach Inertisierung mit $N_2$ wurde eine Stunde bei 200°C vorkondensiert, anschließend innerhalb von ca. 15 Minuten auf 270°C aufgeheizt und bei dieser Temperatur die Reaktion für eine gewünschte Zeit laufen gelassen. Anschließend wurde das Heizbad entfernt, der Kolben abgenommen, das Polymere nach Erkalten gehäckselt und 24 Stunden lang mit Wasser extrahiert.

In der Tabelle 1 sind Lösungs- und Schmelzviskositäten zweier Ansätze, die unterschiedliche Zeiten gelaufen waren, zugegeben. Als Vergleichswerte werden Ansätze, die nicht ACL-modifiziert sind, angeführt (Ansätze 1 und 3).

**Tabelle 1 (Beispiel: 6/2 und 6/4; 6.1 und 6.3 sind Vergleiche)**

| Ansatz | ACL | t bei 270°C(h) | $\eta_{rel}$ | SV (270°C, 10 $s^{-1}$) |
|---|---|---|---|---|
| 6.1 (Vergleich) | nein | 1 | 2,3 | 60 |
| 6.2 | ja | 1 | 2,5 | 120 |
| 6.3 (Vergleich) | nein | 3 | 3,1 | 195 |
| 6.4 | ja | 3 | 3,4 | 850 |

Beispiel 7 bis 14

7

Jeweils ca. 100 g ACL-modifiziertes PA-6-Granulat wurden an einem Rotationsverdampfer im $N_2$-Strom verschiedene Zeiten nachkondensiert. Die Bedingungen waren: 50 U $min^{-1}$, 170° C, 40 l $N_2$ $h^{-1}$.

In der Tabelle 2 sind die $\eta_{rel}$-Werte sowie die Schmelzviskositäten bei einer Temperatur von 250° C angeführt.

Vergleichsversuch 7

Ein lineares, typisches Pa-6 ($\eta_{rel}$ = 3,7), dessen Schmelzviskosität in etwa der des in den Beispielen 7 bis 14 benutzten Granulats entsprach, wurde in der oben beschriebenen Weise 7 Stunden lang nachkondensiert. Es trat nur eine sehr geringe Molekulargewichtserhöhung auf ($\eta_{rel}$ = 3,9).

Die Schmelzviskosität war auch nach der Nachkondensation praktisch unverändert.

Vergleichsversuch 8

Ein lineares, üblicherweise in der Technik verwendetes Produkt of Basis PA-6 ($\eta_{rel}$ = 2,9), dessen relative Lösungsviskosität in etwa der des in den Beispielen 7 bis 14 benutzten Granulats entsprach, dessen Schmelzviskosität aber viel niedriger war (ca. 190 Pa.s bei 250° C und ca. 1 $s^{-1}$), wurde in der oben beschriebenen Weise 7 Stunden lang nachkondensiert. Es trat nur eine relativ geringe Molekulargewichtserhöhung ein ($\eta_{rel}$ = 3,2).

Die Schmelzviskosität des nachkondensierten Polyamids betrug ca. 480 Pa.s.

## Tabelle 2

| Beispiel | t bei 170° C(h) | $\eta_{rel}$ | SV (Pa.s)* |
|---|---|---|---|
| 7 | 0 | 3,0 | 500 |
| 8 | 1 | 3,2 | n.b. |
| 9 | 2 | 3,2 | n.b. |
| 10 | 3 | 3,3 | 1.400 |
| 11 | 4 | 3,5 | n.b. |
| 12 | 5 | 3,7 | n.b. |
| 13 | 6 | 3,7 | n.b. |
| 14 | 7 | 3,6 | 3.000 |

\* SV ist die Schmelzviskosität bei 250° C und einem Schergefälle von ca. 1 $s^{-1}$

n.b. = nicht bestimmt

Die Beispiele zeigen, daß das ACL-modifizierte Polyamid sich schnell zu sehr hochmolekularem Produkt (Versechsfachung der Schmelzviskosität) nachkondensieren läßt, während mit von der Lösungs- bzw. Schmelzviskosität her vergleichbaren linearen Produkten, welche nicht ACL-modifiziert sind, nur ein sehr geringer Molekulargewichtsaufbau erfolgte.

**Patentansprüche**

1. Verfahren zur Herstellung von überwiegend aliphatischen (Co)Polyamiden durch hydrolytische Polymerisation aus polyamidbildenden Lactamen, dadurch gekennzeichnet, daß den zu polymerisierenden Lactamen Pyrrolidon, ϵ-Caprolactam, Önanthlactam, Capryllactam oder Laurinlactam, alleine oder im Gemisch,

0,02-2 Gew.-% α-Amino-ϵ-caprolactam (ACL) sowie eine Dicarbonsäure auf Basis aliphatischer Dicarbonsäuren mit 6-12 C-Atomen, welche maximal 40 Mol% der Dicarbonsäuren aromatische Dicarbonsäuren mit 8-18 C-Atomen enthalten können, und gegebenenfalls bis 20 Äquivalentprozent der Carbonsäuregruppen in den Dicarbonsäuren durch Monocarbonsäuren ersetzt werden können, in Mengen von 0,680-1,10 Äquivalenten Carbonsäuregruppen pro 1 Äquivalent der α-Amino-Gruppe des α-Amino-caprolactams, vor oder mit dem Reaktionsbeginn zugesetzt wird, und daß diese ACL-modifizierten (Co)Polyamide gegebenenfalls in der Festphase zu verzweigt aufgebauten, noch in m-Kresol löslichen (Co)Polyamiden mit erhöhter Viskosität und Schmelzviskosität nachkondensiert werden.

2. Verfahren nach Anspruch 1, dadurch gekennzeichnet, daß 0,2 bis 1 Gew.% α-Amino-ϵ-caprolactam dem zu polymerisierenden Lactam zugesetzt werden.

3. Verfahren nach Ansprüchen 1 und 2, dadurch gekennzeichnet, daß 0,3-0,7 Gew.% α-Amino-ϵ-caprolactam dem zu polymerisierenden Lactam zugesetzt werden.

4. Verfahren nach Ansprüchen 1 bis 3, dadurch gekennzeichnet, daß 0,85 bis 1,03 Äquivalente Carbonsäuregruppen pro 1 Äquivalent der α-Aminogruppe des α-Amino-caprolactams verwendet werden.

5. Verfahren nach Ansprüchen 1 bis 4, dadurch gekennzeichnet, daß 0,90 bis 1,00 Äquivalente Carbonsäuregruppen pro 1 Äquivalent der α-Aminogruppe des α-Amino-ϵ-caprolactams verwendet werden.

6. Verfahren nach Ansprüchen 1 bis 5, dadurch gekennzeichnet, daß die Lactame Laurinlactam oder ϵ-Caprolactam sind.

7. Verfahren nach Ansprüchen 1 bis 6, dadurch gekennzeichnet, daß man die hydrolytische Polymerisation in 0,5 bis 3 Stunden bei 240 bis 285° C durchführt.

8. Verfahren nach Ansprüchen 1 bis 7, dadurch gekennzeichnet, daß die Festphasennachkondensation kontinuierlich oder diskontinuierlich bei einer Temperatur zwischen 140 und 240° C, immer jedoch mindestens 10° C unterhalb des Schmelzpunktes des jeweiligen Polyamids, durchgeführt wird und die Reaktionszeit im Bereich von 0,5 bis 30 Stunden, gewählt wird.

9. Verfahren nach Anspruch 8, dadurch gekennzeichnet, daß die Festphasenkondensations-Reaktionszeit im Bereich von 1-15 Stunden gewählt wird.

**Claims**

1. A process for the production of predominantly aliphatic (co)-polyamides by hydrolytic polymerization of polyamide-forming lactams, characterized in that pyrrolidone, ϵ-caprolactam, oenanthic lactam, caprylic lactam or lauric lactam, either individually or in admixture, 0.02 to 2% by weight α-amino-ϵ-caprolactam (ACL) and a dicarboxylic acid based on aliphatic $C_{6-12}$ dicarboxylic acids, which may contain at most 40 mol-% - based on the dicarboxylic acids - aromatic $C_{8-18}$ dicarboxylic acids and optionally up to 20 equivalent-% of the carboxylic acid groups in the dicarboxylic acids may be replaced by monocarboxylic acids, in quantities of 0.680 to 1.10 equivalents carboxylic acid groups to 1 equivalent of the α-amino group of the α-aminocaprolactam are added to the lactams to be polymerized before or at the beginning of the reaction and in that these ACL-modified (co)-polyamides are optionally post-condensed in the solid phase to form branched, but still m-cresol-soluble (co)-polyamides showing increased viscosity and melt viscosity.

2. A process as claimed in claim 1, characterized in that 0.2 to 1% by weight α-amino-ϵ-caprolactam is added to the lactam to be polymerized.

3. A process as claimed in claims 1 and 2, characterized in that 0.3 to 0.7% by weight α-amino-ϵ-

caprolactam is added to the lactam to be polymerized.

4. A process as claimed in claims 1 to 3, characterized in that 0.85 to 1.03 equivalent carboxylic acid groups are used to 1 equivalent of the α-amino group of the α-amino-caprolactam.

5. A process as claimed in claims 1 to 4, characterized in that 0.90 to 1.00 equivalent carboxylic acid groups are used to 1 equivalent of the α-amino group of the α-amino-ε-caprolactam.

6. A process as claimed in claims 1 to 5, characterized in that the lactams are lauric lactam or ε-caprolactam.

7. A process as claimed in claims 1 to 6, characterized in that the hydrolytic polymerization is carried out over a period of 0.5 to 3 hours at 240 to 285° C.

8. A process as claimed in claims 1 to 7, characterized in that the solid-phase post-condensation is carried out continuously or discontinuously over a period of 0.5 to 30 hours at a temperature of 140 to 240° C, but always at a temperature at least 10° C below the melting point of the particular polyamide.

9. A process as claimed in claim 8, characterized in that the reaction time for the solid-phase post-condensation is from 1 to 15 hours.

**Revendications**

1. Procédé de préparation de (co)polyamides à caractère principalement aliphatique par polymérisation hydrolytique à partir de lactames formant des polyamides, caractérisé en ce que l'on ajoute aux lactames à polymériser, la pyrrolidone, l'epsilon-caprolactame, l'oenantholactame, le caprylolactame ou le laurolactame, seuls ou à l'état de mélanges,
0,02 à 2 % en poids d'alpha-amino-epsilon-caprolactame (ACL) et un acide dicarboxylique à base d'acides dicarboxyliques aliphatiques en $C_6$-$C_{12}$, pouvant contenir au maximum 40 mol % d'acides dicarboxyliques aromatiques en $C_8$-$C_{18}$ par rapport aux acides dicarboxyliques totaux, ceux-ci pouvant être remplacés le cas échéant, en proportions allant jusqu'à 20 équivalents % des groupes acides carboxyliques des acides dicarboxyliques, par des acides monocarboxyliques, en quantités de 0,680 à 1,10 équivalents de groupes acides carboxyliques par équivalent du groupe alpha-amino de l'alpha-amino-caprolactame, avant la réaction ou au début de la réaction, et en ce que l'on soumet le cas échéant ces (co)polyamides modifiés par l'ACL à condensation complémentaire en phase solide avec formation de (co)polyamides à structure ramifiée mais encore solubles dans le m-crésol, et ayant des valeurs accrues de viscosité et de viscosité à l'état fondu.

2. Procédé selon la revendication 1, caractérisé en ce que l'on ajoute de 0,2 à 1 % en poids d'alpha-amino-epsilon-caprolactame ou lactame à polymériser.

3. Procédé selon les revendications 1 et 2, caractérisé en ce que l'on ajoute de 0,3 à 0,7 % en poids d'alpha-amino-epsilon-caprolactame au lactame à polymériser.

4. Procédé selon les revendications 1 à 3, caractérisé en ce que l'on utilise de 0,85 à 1,03 équivalents de groupes acides carboxyliques par équivalent du groupe alpha-amino de l'alpha-amino-caprolactame.

5. Procédé selon les revendications 1 à 4, caractérisé en ce que l'on utilise de 0,90 à 1,00 équivalent de groupes acides carboxyliques par équivalent du groupe alpha-amino de l'alpha-amino-epsilon-caprolactame.

6. Procédé selon les revendications 1 à 5, caractérisé en ce que le lactame est le laurolactame ou l'epsilon-caprolactame.

7. Procédé selon les revendications 1 à 6, caractérisé en ce que la polymérisation hydrolytique est effectuée en une durée de 0,5 à 3 h à des températures de 240 à 285° C.

8. Procédé selon les revendications 1 à 7, caractérisé en ce que la condensation complémentaire en phase solide est réalisée en continu ou en discontinu à une température de 140 à 240 °C mais toujours inférieure d'au moins 10 °C au point de fusion du polyamide, et la durée de réaction est choisie dans l'intervalle de 0,5 à 30 h.

9. Procédé selon la revendication 8, caractérisé en ce que l'on choisit la durée de la réaction de condensation en phase solide dans l'intervalle de 1 à 15 h.

FIG. 1